# EUROPÄISCHE PATENTSCHRIFT

(11) **EP 3 103 627 B1**
(45) Veröffentlichungstag und Bekanntmachung des Hinweises auf die Patenterteilung: **07.07.2021**
(21) Anmeldenummer: 16169617.4
(22) Anmeldetag: 13.05.2016
(51) Int. Cl.: B29C 70/54, B29C 70/44, B29C 70/86, B29C 70/08, B29C 70/48

(54) **ABSAUGUNG IN HARZINFUSIONSVERFAHREN**
SUCTION IN RESIN INFUSION METHOD
ASPIRATION DANS UN PROCEDE D'INFUSION DE RESINE

(30) Priorität: 10.06.2015 DE 102015007285
(43) Veröffentlichungstag der Anmeldung: 14.12.2016
(73) Patentinhaber: Airbus Defence and Space GmbH, 82024 Taufkirchen (DE)
(72) Erfinder: GAJEWSKI, Benjamin, 67169 Kallstadt (DE)
(74) Vertreter: Isarpatent

(56) Entgegenhaltungen:
- DE-A1- 10 253 100

## Beschreibung

Bei Harzinfusionsverfahren hat die Wahl der Anguss- und Absaugungsstrategie entscheidenden Einfluss auf den Herstellungsprozess des Bauteils, z. B. bezüglich der Infiltrationsgeschwindigkeit und der Prozesssicherheit.

So können bei der Herstellung großer Bauteile oder bei Verfolgung einer ungeeigneten Anguss- und Absaugungsstrategie Lufteinschlüsse im Laminat gebildet werden, die beispielsweise durch Ungleichmäßigkeiten bei der Fließgeschwindigkeit (z. B. einem lokalen Vorauseilen des Matrixmaterials) entstehen können und damit die Prozesssicherheit und die Qualität des hergestellten Bauteils beeinträchtigen. Insbesondere bei der Herstellung von mehrschichtigen Bauteilen mittels Harzinfusionstechnik ist es teilweise schwierig, derartige Lufteinschlüsse mit ausreichender Sicherheit zu vermeiden.

Zwar kann versucht werden, mittels einer definierten Fließfront des injizierten Matrixmaterials während der Harzinfusion, die in einer Kavität eines formgebenden Werkzeugs vorhandene (Rest-) Luft aus der Kavität zu schieben. Dieser theoretische Gedanke lässt sich jedoch nicht immer problemlos in die Realität umsetzen, weil die Fließfront sich an manchen Stellen schneller fortbewegt als an anderen, so dass keine definierte Fließfront entsteht und insbesondere Luftinseln in dem zu durchtränkenden Material gebildet werden können.

Zudem können während der Polymerisation des Matrixmaterials Reaktionsgase entstehen, die zu unerwünschten, kleinen Poren im Laminat führen können. Um die Gefahr dieser Porenbildung zu minimieren, ist es zweckmäßig, die Strecke, die die Reaktionsgase zur nächsten Absaugung der Bauteilkavität zurücklegen müssen, möglichst kurz zu gestalten. Eine nach Möglichkeit beidseitig oberflächige Absaugung des herzustellenden Bauteils lässt sich teilweise nicht oder nur unter erheblichem Aufwand realisieren. Insbesondere bei Harzinfusionsverfahren in geschlossenem Werkzeug geht eine flächige Absaugung im Allgemeinen mit Einbußen der Oberflächenqualität des Bauteils einher. Vor allem bei der Herstellung mehrschichtiger Bauteile, bei denen die beiden einen Kern umgebenen Decklagen aus Fasermaterial in einem Herstellungsprozess infiltriert werden, gestaltet sich eine flächige Absaugung beider Decklagen problematisch.

Aus dem Stand der Technik sind viele verschiedene Methoden zur Realisierung des Angusses und der Absaugung bekannt.

Das VAP-Verfahren wird u. a. in der Druckschrift EP 1 181 149 B1 beschrieben. VAP ist die Abkürzung für den englischen Begriff "*Vacuum Assisted Process".* Dieses Verfahren sieht den Einsatz einer semipermeablen Membran vor, die für Luft durchlässig, für das Matrixmaterial jedoch undurchlässig ist. Die zweckmäßige Verwendung dieser Membran auf der Oberfläche des herzustellenden Bauteils ermöglicht eine flächige Absaugung und minimiert so die Gefahr etwaiger Lufteinschlüsse.

Das VAP-Verfahren wird primär bei Harzinfusionsverfahren auf einseitig formgebendem Werkzeug angewandt. In geschlossenem Werkzeug (z. B. bei einem RTM-Verfahren) hingegen gestaltet sich die Verwendung der semipermeablen Membran zwischen Laminat und formgebendem Werkzeug z. B. bei Harzinjektionsverfahren nicht unproblematisch. Zum einen verursachen die zwischen dem Laminat und dem formgebenden Werkzeug positionierten Materialien (semipermeable Membran und permeable Schicht, z. B. Vlies oder Abreißgewebe zum Lufttransport) Einbußen in der Qualität der Bauteiloberfläche, zum anderen kann bei einem entsprechend hohen Injektionsdruck die Dichtigkeit der semipermeablen Membran nicht zu 100 % gewährleistet werden. Bei hohem anliegendem Druck ist es möglich, dass sich einzelne Poren der semipermeablen Membran druckbedingt weiten, so dass ein unerwünschter Durchlass von Matrixmaterial möglich wird.

In der Druckschrift DE 198 13 105 A1 ist ein Harzinjektionsverfahren in geschlossenem Werkzeug beschrieben, bei dem im Bereich der Absaugung eine semipermeable Membran verwendet wird. Dieses Verfahren sieht lediglich einen lokal sehr begrenzten Einsatz von semipermeabler Membran vor. Einbußen der Oberflächenqualität sind dann zwar lokal begrenzt, andererseits ist so keine flächige Absaugung möglich.

Die Druckschrift EP 1 859 920 B1 offenbart eine Verwendung von Entlüftungskanälen, die mindestens einseitig mit semipermeabler Membran versehen sind und so das Einsaugen und Abtransportieren von Luft, jedoch nicht von Matrixmaterial ermöglichen. Die Entlüftungskanäle haben eine Breite zwischen 5 und 50 mm. Mit ihrer Hilfe kann ein Netzwerk geschaffen werden, das sich über das gesamte Bauteil erstreckt. Nach dessen Herstellung verbleiben die Entlüftungskanäle zumindest größtenteils im Bauteil. Dieser Effekt kann insbesondere bei Bauteilen für Luftfahrtanwendungen zu einer unerwünschten Erhöhung der Bauteilmasse führen.

Zudem ergeben sich durch die Entlüftungskanäle potenzielle Stellen für eine etwaige Delamination, weil die Entlüftungskanäle oberflächig teilweise eine Struktur aufweisen, die ein Verbinden des Matrixmaterials mit dem Entlüftungskanal nicht zulässt. Aus diesem Grund muss ein Abstand zwischen den einzelnen Lüftungskanälen eingehalten werden, damit zwischen den Kanälen noch ausreichend Fläche vorhanden ist, auf der die Verklebung bzw. der Materialverbund nicht durch die Entlüftungskanäle beeinträchtigt wird. Durch diese zwangsweise auf eine lokale Positionierung beschränkte Anwendung der Entlüftungskanäle ist eine flächige Absaugung, wie sie vom VAP-Verfahren bekannt ist, nicht möglich. Zudem besteht die Gefahr, dass sich bei einer Leckage im Netzwerk das gesamte Entlüftungsnetzwerk mit Matrixmaterial füllt.

Patent Dokument: DE 102 53 100 A1 offenbart ein Verfahren gemäß dem Oberbegriff des Anspruchs 1 und eine Kombination gemäß dem Oberbegriff des Anspruchs 12.

Der vorliegenden Erfindung liegt die Aufgabe zugrunde, eine Technik zu entwickeln, mit der Lufteinschlüsse und Porenbildung verhindert oder zumindest reduziert werden können.

Die Aufgabe wird gelöst durch ein Verfahren gemäß Anspruch 1, durch eine Kombination gemäß Anspruch 12 und durch eine Infusionsanlage gemäß Anspruch 15. Bevorzugte Ausführungsformen werden in den Unteransprüchen offenbart.

Ein Verfahren zur Herstellung eines mehrschichtigen Bauteils mittels Infusionstechnik umfasst ein Schichten von Fasermaterial und mindestens einem Kern sowie ein Absaugen eines Luftvolumens aus wenigstens einer Aushöhlung im mit dem Fasermaterial geschichteten Kern. Insbesondere erfolgt das Absaugen somit nach dem Schritt des Schichtens von Fasermaterial und Kern. Die Aushöhlung kann beispielsweise eine Vertiefung in einer Oberfläche des Kerns sein oder ein Hohlraum im Kern mit einem Durchgang zu einer Oberfläche des Kerns.

Durch den Schritt des Schichtens werden vorzugsweise der Kern und mindestens eine Lage Fasermaterial flächig aneinander angeordnet. Insbesondere wird dabei vorzugsweise ein Laminataufbau aus Halbzeugeinzelschichten gebildet, die das Fasermaterial und den Kern umfassen. Das Fasermaterial ist dabei vorzugsweise trocken.

Das Verfahren umfasst weiterhin ein Infiltrieren des Fasermaterials mit Matrixmaterial. Das Matrixmaterial kann ein beliebiges, für die Infusionstechnik geeignetes Matrixmaterial sein. Es kann beispielsweise einen duroplastischen Kunststoff und/oder ein Thermoplast umfassen. Alternativ oder zusätzlich kann es (in einem Mehrkomponentensystem) mindestens einen Härter umfassen.

Die Aushöhlung ist dabei erfindungsgemäß vom infiltrierten Fasermaterial durch ein luftdurchlässiges und harzdichtes Trennmedium getrennt.

Die Bezeichnung "harzdicht" ist dabei im Rahmen dieser Druckschrift als gleichbedeutend mit dem Ausdruck "für das Matrixmaterial undurchlässig" anzusehen; insbesondere soll die Dichtigkeit durch diesen Begriff, der lediglich seiner größeren Prägnanz halber verwendet wird, nicht auf ein bestimmtes Matrixmaterial beschränkt werden; für die Dichtigkeit ist dabei von für Infusionsverfahren zweckdienlichen Außenbedingungen (z. B. Temperaturen, Drücke) auszugehen.

Ein Kern für ein mehrschichtiges Faserverbundbauteil ist für eine Verwendung in einem erfindungsgemäßen Verfahren geeignet. Er weist wenigstens eine Aushöhlung auf, die durch ein luftdurchlässiges, harzdichtes Trennmedium abgedeckt ist.

Das Trennmedium gemäß einem erfindungsgemäßen Verfahren verhindert, dass infiltriertes Fasermaterial in die Aushöhlung eindringt. Ein Luftaustausch zwischen der Aushöhlung und dem Bereich, in dem sich das infiltrierte oder - zuvor - das zu infiltrierende Fasermaterial befindet, ist jedoch möglich. Insbesondere ist einerseits ein Absaugen von Luft in der Aushöhlung durch das Trennmedium hindurch möglich, und anderseits kann im infiltrierten Fasermaterial befindliche Luft durch das Trennmedium in die Aushöhlung eindringen. Ein solches Eindringen wird durch das (vorherige) Absaugen der Luft aus der Aushöhlung und damit das Erzeugen oder Verstärken einer Druckdifferenz zwischen der Aushöhlung und einem Bereich mit dem infiltrierten Fasermaterial begünstigt.

Somit ermöglichen es ein erfindungsgemäßes Verfahren, Lufteinschlüsse und/oder Reaktionsgase aus dem infiltrierten Fasergemisch abzusaugen. Dadurch kann insbesondere eine nachteilige Porenbildung im Bauteil verhindert oder zumindest vermindert werden. Durch eine lokale oder flächige Absaugung des infiltrierten Fasermaterials in verschiedenen, den Kern umschließenden Schichten kann eine optimale Absaugung erreicht werden. Durch die innenliegende Absaugung werden keine Schäden an den dem Werkzeug zugewandten Bauteiloberflächen erzeugt.

Das Trennmedium kann beispielsweise eine Membran umfassen, die vorzugsweise mindestens einen semipermeablen Bereich aufweist. Die Membran kann dazu eingerichtet sein, sich z. B. beim Infiltrieren des Fasermaterials auf eine Oberfläche des Kerns zu legen und dabei insbesondere eine Öffnung der Aushöhlung zu verschließen. Alternativ oder zusätzlich kann das Trennmedium eine über den Kern gezogene und/ oder aufgeklebte, luftdurchlässige und harzdichte, vorzugsweise flexible Haut umfassen und/ oder eine luftdurchlässige, harzdichte Deckschicht auf einer Oberfläche des Kerns, welche die wenigstens eine Aushöhlung abdeckt und beispielsweise aufgeschmolzen oder aufgeklebt sein kann. Eine derartige Haut oder Deckschicht kann mehrere Bereiche umfassen, von denen mindestens einer luftdurchlässig ist; insbesondere kann die Haut bzw. Deckschicht eine semipermeable Membran umfassen.

Gemäß einer vorteilhaften Ausführungsvariante umfasst ein erfindungsgemäßes Verfahren ein Aufbringen von atmungsaktivem Material auf eine Oberfläche des Kerns zur Herstellung des luftdurchlässigen, harzdichten Trennmediums. Auf diese Weise kann eine semipermeable Membran als Trennmedium erzeugt werden.

Diese Variante bietet den Vorteil, dass die semipermeable Membran auch auf komplexen Oberflächengeometrien des Kerns realisiert werden kann, insbesondere braucht kein Glasgewebe auf dem Kern drapiert zu werden. Zudem ist bei dieser Ausführungsform kein Prozessschritt und kein Material nötig, um die semipermeable Membran mit dem Kernmaterial zu verbinden. Bei Schaum als Material des Kerns kann zudem die Verbindung zwischen dem Kern mit der semipermeablen Membran und dem Fasermaterial verbessert werden. Dies ist darin begründet, dass die semipermeable Membran die oberflächig raue Struktur des darunter liegenden Schaums weitestgehend annimmt und dem Matrixmaterial somit eine gute Klebefläche bietet. Das Aufbringen des atmungsaktiven Materials auf die Oberflächen eines geeigneten Kernmaterials kann beispielsweise mittels eines definierten Gieß- oder Sprühvorgangs realisiert werden.

Alternativ oder zusätzlich kann eine semipermeable Membran als Trennmedium auf mindestens einem Teil einer Oberfläche fixiert werden, beispielsweise durch Kleben, das flächig oder an vereinzelten Klebestellen realisiert werden kann.

Vorzugsweise umfasst der Kern ein poröses Material, weist also eine Vielzahl von Poren oder Zellen auf. Insbesondere ist es zweckmäßig, einen Kern zu verwenden, der ein Material mit offenen Zellen umfasst. Dieses Material kann z. B. einen offenporigen Schaum enthalten. Alternativ oder zusätzlich kann der Kern eine Wabenstruktur aufweisen, bei der die einzelnen Waben voneinander getrennt oder miteinander verbunden sein können.

Die mindestens eine Aushöhlung kann ein Luftvolumen aus dem infiltrierten Fasermaterial aufnehmen, verfügt also an mindestens einer Oberfläche des Kerns über mindestens einen Zugang von außen. Ein derartiger Zugang kann beispielsweise punktuell, länglich oder flächig ausgebildet sein. Gemäß einer bevorzugten Ausführungsform hat der Zugang in mindestens einer Richtung einen Durchmesser von höchstens 15mm. Noch bevorzugter ist eine Ausführungsform, bei der der Zugang einen Durchmesser von höchstens 1 mm oder sogar höchstens 0,5 mm hat; insbesondere kann der Kern einen offenporigen Schaum mit einer solchen maximalen Porengröße umfassen. Bei derartigen Größen des Zugangs können Belastungen der Trennschicht minimiert und ein Reißen auch bei Druckbelastung verhindert werden.

Bevorzugt ist eine Ausführungsform, bei der die mindestens eine Aushöhlung mit einer oder mehreren weiteren Aushöhlungen im Innern des Kerns durch einen oder mehrere Luftdurchlässe verbunden ist, die somit ein Luftvolumen einschließen, das über die Aushöhlung von außerhalb des Kerns zugänglich ist. Dies bietet den Vorteil einer größeren Aufnahmekapazität von Luft oder Reaktionsgasen aus dem infiltrierten Fasermaterial.

Alternativ oder zusätzlich kann die mindestens eine Aushöhlung gegenüber mindestens einer weiteren Aushöhlung des Kerns harzdicht abgeschlossen sein, wobei die weitere(n) Aushöhlung(en) ihrerseits vom infiltrierten Fasermaterial durch ein luftdurchlässiges und harzdichtes Trennmedium getrennt sein kann bzw. können, beispielsweise indem sie vom Trennmedium abgedeckt wird/ werden. Diese Ausführungsform bietet den Vorteil, dass sich das Matrixmaterial bei einer eventuellen Leckage des Trennmediums nicht zwischen den Aushöhlungen ausbreiten kann.

Um die Auswirkungen einer eventuellen Leckage im Bereich der Aushöhlung(en) möglichst gering zu halten, kann es sinnvoll sein, eine durch mehrere Aushöhlungen gebildete durchgehende Kavität des Kernmaterials (wie sie bspw. bei offenporigem Schaum vorkommen kann) in mehrere Kavitäten zu unterteilen. Insbesondere kann ein Kern verwendet werden, der mehrere, luftdicht miteinander verbundene Teile aus offenporigem Material (z. B. Schaum) umfasst. Je kleiner die einzelnen Kavitäten, desto geringer ist die maximal mögliche Massenzunahme des Bauteils aufgrund von durch eine Leckage eintretendes Matrixmaterial.

Offenbarungsgemäß wird ein Kern aus einem Material verwendet, das bei Kontakt mit dem Matrixmaterial dessen Viskosität steigert. Dabei ist eine Struktur des Kernmaterials mit kleinen Zellen (d. h. bspw. ein offenporiger Schaum gegenüber einer Wabenstruktur) vorteilhaft. Es ist ebenfalls denkbar, auf die Oberfläche des Kernmaterials ein Material aufzubringen, das zu einem Viskositätsanstieg des Matrixmaterials führt, sobald diese beiden Komponenten miteinander in Kontakt treten. Vorzugsweise ist dieses viskositätssteigernde Material auf der Oberfläche des Kernmaterials zumindest in Teilen des semipermeablen Oberflächenbereichs ebenfalls luftdurchlässig.

Alternativ oder zusätzlich kann auf der Oberfläche des Kerns ein Granulat und/oder Pulver aufgebracht werden, bevor die Oberfläche semipermeabel und/oder hermetisch abgedichtet wird. Vorzugsweise ist das Granulat bzw. Pulver aus einem Material, das bei Kontakt mit dem Matrixmaterial dessen Viskosität erhöht.

Durch derartige Maßnahmen kann verhindert werden, dass sich das Matrixmaterial im Falle einer Leckage im Trennmedium im Kern ausbreitet. Insbesondere bei Kernmaterialen mit sehr kleinen Zellen bzw. Poren wird das Fortschreiten des Matrixmaterials im Kernmaterial durch den Viskositätsanstieg gestoppt.

Beispielsweise kann der Kern bzw. ein derartiges Granulat oder Pulver ein oder mehrere Material(ien) enthalten, das/die als Beschleuniger der Aushärtereaktion des Matrixmaterials dient/dienen. Derartige Beschleuniger reagieren mit dem Matrixmaterial und/ oder einem ggf. darin enthaltenen Härter und führen zu einer vorzeitigen und beschleunigten Aushärtung des Matrixmaterials oder zumindest zu einer rapiden Viskositätssteigerung (dem sogenannten Gelieren) des Matrixmaterials. Prinzipiell gibt es eine Vielzahl an Beschleunigern, die zweckmäßig jedoch in Abstimmung zu dem verwendeten Matrixmaterial ausgesucht werden. Im Falle eines Epoxidharzes als Matrixmaterial kann der Kern beispielsweise Triphenylphosphan enthalten, und/oder es kann ein Granulat oder Pulver verwendet werden, das Triphenylphosphan enthält; dieses wirkt in diesem Fall als Beschleuniger. Beschleuniger lassen sich durch einen Träger (z. B. Kieselgel) in ihren Eigenschaften (z. B. Schmelztemperatur) beeinflussen.

Vorzugsweise umfasst ein derart verwendetes Granulat und/oder Pulver Partikel, die einen geringeren Durchmesser haben als die Poren des Kerns. Gemäß einer bevorzugten Ausführungsform sind die Partikel mindestens teilweise im Innern des Kerns angeordnet. Sie können beispielsweise mit Hilfe von Druckluft von der Oberfläche in Richtung des Inneren des Kerns getrieben werden bzw. worden sein.

So kann verhindert werden, dass das Granulat bzw. Pulver die Verbindung zwischen dem Kern und einer Deckschicht als Trennmedium beeinträchtigt. Insbesondere bleibt die Oberfläche des Kernmaterials in diesem Fall von dem viskositätssteigernden Material unbeeinflusst, und im Falle einer Leckage im Trennmedium kann gleichwohl ein Eindringen von Matrixmaterial schnell gestoppt werden.

Gemäß einer bevorzugten Ausführungsvariante eines erfindungsgemäßen Verfahrens erfolgt das Absaugen wenigstens teilweise durch ein an dem Kern angeschlossenes Verbindungselement zu einer Vakuumeinheit. Das Verbindungselement kann beispielsweise in direktem Kontakt zum Kern stehen. Der Kern kann beispielsweise als Verteilerkopf für die Sogwirkung eingesetzt werden, so dass nur solche Luft aus der Umgebung des Kerns eingesogen wird, die zuvor den Kern durchströmt hat. Das Verbindungselement kann z. B. einen Schlauch und/ oder ein Rohr umfassen. Das Verfahren kann einen Schritt des Anschließens der Verbindungseinheit an den Kern umfassen.

Bei dieser Ausführungsform kann das Absaugen durch das Kernmaterial hindurch erfolgen. Dies ermöglicht ein Erzeugen einer flächigen Sogwirkung an einer Kontaktfläche von Kern bzw. Trennmedium und dem infiltrierten Material. So können simultan Lufteinschlüsse oder -poren aus einem relativ großen Bereich des infiltrierten Fasermaterials gesogen werden. Das Verbindungselement kann im hergestellten Bauteil belassen oder aus ihm entfernt werden.

Die Infusionsanlage zur Herstellung von Faserverbundbauteilen umfasst eine Vakuumeinheit, die dazu eingerichtet ist, ein Luftvolumen aus der mindestens einen Aushöhlung eines verwendeten Kerns abzusaugen. Gemäß einer bevorzugten Ausführungsform umfasst die Infusionsanlage zudem ein Verbindungselement, das dazu eingerichtet ist (z. B. in unmittelbarem Kontakt) an einen Kern angeschlossen zu werden.

Gemäß einer vorteilhaften Ausführungsform eines erfindungsgemäßen Verfahrens erfolgt das Infiltrieren des Fasermaterials durch ein Zuleiten von Matrixmaterial von einer ersten Seite des Kerns her, und das Absaugen des Luftvolumens aus der wenigstens einen Aushöhlung erfolgt durch eine Vakuumeinheit, die Saugwirkung in Richtung einer zweiten (von der ersten verschiedenen) Seite des Kerns entfaltet; die Vakuumeinheit kann dabei wie oben beschrieben mittels eines Verbindungselements direkt an den Kern angeschlossen sein. Vorzugsweise liegt die zweite Seite der ersten in einer Ausbreitungsrichtung des Matrixmaterials im Fasermaterial gegenüber, so dass also der Kern zwischen der ersten und der zweiten Seite angeordnet ist. Insbesondere können das Zuleiten und das Absaugen an weitestmöglich voneinander beabstandeten Positionen im Innern eines formgebenden Werkzeugs erfolgen, in dem das Fasermaterial und der Kern geschichtet werden bzw. wurden.

Dadurch kann erreicht werden, dass ein zugeleitetes, sich im formgebenden Werkzeug ausbreitendes Matrixmaterial die Absaugevorrichtung möglichst spät erreicht und der Absaugevorgang somit besonders lange fortgesetzt werden kann.

Alternativ oder zusätzlich kann die Absaugung des Luftvolumens aus der Aushöhlung und/oder ein Absaugen von Luft oder sonstigem Gas während des Infiltrierens des Fasermaterials flächig an einer oder mehreren flächenmäßig größten Begrenzungsfläche(n) der Kavität im formgebenden Werkzeug realisiert werden, in der das Bauteil hergestellt wird. In diesem Fall kann bei einer mehrseitigen Zuführung des Matrixmaterials (z. B. bei einem Ringanguss) eine möglichst lang andauernde, unterstützende Absaugwirkung des zumindest teilweise mit semipermeablem Trennmedium umgebenen Kerns erreicht werden.

Generell ist es vorteilhaft, das Angussverfahren in Abstimmung mit dem Ort der Absaugung so zu treffen, dass eine vollständige Benetzung mit Matrixmaterial der semipermeablen Oberflächenbereiche des Kerns erst zu einem möglichst späten Zeitpunkt während des Infiltrationsvorgangs erreicht wird. Beispielsweise kann das Infiltrieren des Fasermaterials mit Matrixmaterial ein Umspülen des Kerns mit dem Matrixmaterial entlang einer ringförmigen Bahn oder Rinne umfassen. In diesem Fall kann eine Absaugevorrichtung vorzugsweise in einem Zentrum der ringförmigen Bahn bzw. Rinne angeordnet sein.

Gemäß einer bevorzugten Ausführungsform umfasst die Infusionsanlage ein beidseitig oder einseitig formgebendes Werkzeug für ein herzustellendes mehrschichtiges Bauteil. Analog zum beschriebenen vorteilhaften Verfahren ist eine Ausführungsform besonders bevorzugt, die ein derartiges formgebendes Werkzeug mit einem Anschluss an eine Zuleitungsvorrichtung für ein Matrixmaterial sowie einem Anschluss an eine Vakuumeinheit zum Absaugen von Luft aus dem Innern des formgebenden Werkzeugs aufweist. Vorzugsweise sind der Anschluss an die Zuleitungsvorrichtung und der Anschluss an die Vakuumeinheit in größtmöglichem Abstand voneinander am formgebenden Werkzeug angeordnet. Dadurch kann erreicht werden, dass ein zugeleitetes, sich im formgebenden Werkzeug ausbreitendes Matrixmaterial die Absaugevorrichtung möglichst spät erreicht und der Absaugevorgang auch während des Infiltrierens somit besonders lange fortgesetzt werden kann.

Bei einer vorteilhaften Ausführungsform eines erfindungsgemäßen Verfahrens erfolgt das Absaugen des Luftvolumens aus der wenigstens einen Aushöhlung im Wege eines Evakuierens einer Kavität eines geschlossenen, formbildenden Werkzeugs für das Bauteil, in der das Fasermaterial und der Kern (zum Zeitpunkt des Absaugens) geschichtet sind. Auf diese Weise kann im Kern mit der wenigstens einen Aushöhlung ein Saugdruck gespeichert werden, und ein Absaugen nach Beginn des Infiltrierens kann entbehrlich sein.

Im Folgenden werden bevorzugte Ausführungsbeispiele der Erfindung anhand von Zeichnungen näher erläutert. Es versteht sich, dass einzelne Elemente und Komponenten auch anders kombinierbar sind als dargestellt.
Figur 1 einen Querschnitt eines Kerns gemäß einer Ausführungsform der vorliegenden Erfindung;
Figur 2 einen Querschnitt durch ein beidseitig formgebendes Werkzeug mit darin geschichtetem Fasermaterial und Kern gemäß einer Ausführungsform der vorliegenden Erfindung; und
Figur 3 einen Querschnitt durch ein beidseitig formgebendes Werkzeug mit darin geschichtetem Fasermaterial und Kern während einer Durchführung eines erfindungsgemäßen Verfahrens.

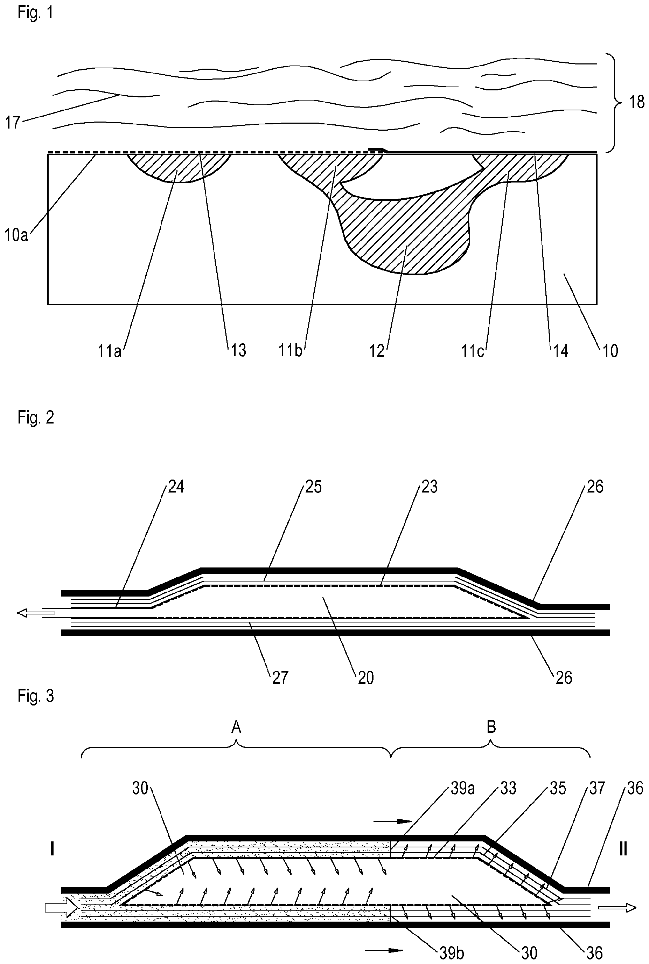

In Figur 1 ist ein Kern 10 mit Aushöhlungen 11a, 11b, 11c und 12 in einem Querschnitt dargestellt. Die Aushöhlungen 11a und 11b werden an der Oberfläche 10a des Kerns 10 von einer harzdichten, luftdurchlässigen Deckschicht 13 abgedeckt. Durch sie hindurch besteht Zugang von außerhalb des Kerns insbesondere zu einem Luftvolumen in der Aushöhlung. Der Kern ist mit Fasermaterial 17 geschichtet, das gemäß einem erfindungsgemäßen Verfahren von Matrixmaterial infiltriert wird. Die den Kern und das Fasermaterial umfassende Schichtung ist vorzugsweise auf einem einseitig formbildenden Werkzeug oder im Innern eines (nicht gezeigten) beidseitigen formbildenden Werkzeugs angeordnet.

Die Aushöhlungen 11b und 11c sind miteinander durch einen Durchlass im Innern des Kerns verbunden; der Durchlass bildet dabei selbst eine Aushöhlung 12 im Kern aus. Die Aushöhlung 11a ist gegenüber den Aushöhlungen 11b, 11c und 12 harzdicht abgeschlossen.

Allein die Deckschicht 13 würde die Aushöhlung 11b jedoch nicht harzdicht von einem Bereich 18 mit dem infiltrierten Fasermaterial trennen: Erst ein luft- und harzdichtes Versiegelungsmaterial 14 verhindert, dass Matrixmaterial durch die Aushöhlungen 11c und 12 hindurch in die Aushöhlung 11b eindringen kann.

Ahnlich könnte ein Kern eine Aushöhlung aufweisen, die von einer Deckschicht abgedeckt ist, die sowohl einen luftdurchlässigen Bereich als auch einen luftundurchlässigen Bereich aufweist. Insbesondere wenn eine verwendete semipermeable Membran nicht groß genug ist, um eine Aushöhlung abzudecken, kann ein verbleibender Bereich vorzugsweise mit einer luftdichten Versiegelungsschicht abgedeckt sein. Dies kann beispielsweise mit einem Polymer realisiert werden, das die für mehrschichtige Bauteile sehr wichtige Verbindung zwischen Kernmaterial und Decklagen verbessern kann. Mit einem luftdurchlässigen Bereich ist die Schicht dann auch insgesamt luftdurchlässig.

Dem Kern eines herzustellenden mehrschichtigen Bauteils wird vorzugsweise (zusätzlich zu den bekannten strukturellen Aufgaben wie beispielsweise dem Bewirken einer hohen spezifischen Biegesteifigkeit, wie sie für mehrschichtige Bauteile typisch ist) die Aufgabe des Absaugens zugeteilt. Dabei kann der Kern als alleiniger Operator der Absaugung oder lediglich als Teil des Absaugsystems fungieren. Wird die Absaugung der Bauteilkavität durch den Kern allein realisiert, verfügt dieser vorzugsweise über eine Verbindung zu einer Vakuumeinheit. Diese Verbindung kann beispielsweise durch ein Verbindungselement (wie etwa ein Schlauch, ein Rohr oder eine andersartige Komponente) bewerkstelligt sein, das an den Kern angeschlossen werden oder worden sein kann, vorzugsweise in direktem Kontakt. Dieses Verbindungselement kann vorzugsweise Luft vom Kern zur Vakuumeinheit transportieren. Form, Material, Gestalt und Eigenschaften des Verbindungselements können dabei dem Einsatzzweck angepasst werden.

Figur 2 zeigt im Querschnitt schematisch eine mögliche Ausführungsform, bei der Luft durch den mit einer harzdichten, luftdurchlässigen Deckschicht 23 ummantelte Kern 20 hindurch aus der Kavität 25 eines beidseitigen formbildenden Werkzeugs 26 abgesaugt wird.

In dem beidseitig formgebenden Werkzeug 26 mit einer Kavität 25 sind Fasermaterial 27 und der Kern 20 gemäß einer Ausführungsform der vorliegenden Erfindung geschichtet. Der Kern 20 weist eine Oberfläche mit einer Mehrzahl an Aushöhlungen auf und ist mit einer luftdurchlässigen, harzdichten Deckschicht 23 ummantelt.

Dabei ist der Kern 20 in direktem Kontakt an ein Verbindungselement 24 zu einer (nicht gezeigten) Vakuumeinheit angeschlossen, so dass Luft aus der Umgebungsluft des Kerns nur durch diesen hindurch abgesaugt werden kann. Das Verbindungselement 24 kann nach der Bauteilherstellung ggf. im Bauteil belassen werden oder so gestaltet bzw. im übermaßigen Randbereich des Bauteils positioniert sein, dass es entfernt werden kann.

Durch das Absaugen von Luft aus dem Kern wird eine Druckdifferenz erzeugt, die bewirkt, dass an Oberfläche des Kerns 20 Lufteinschlüsse und -bläschen aus dem angrenzenden Bereich durch die luftdurchlässige Deckschicht 23 hindurch in den Kern, insbesondere in dessen Aushöhlungen an der Oberfläche eingesogen werden. Auf diese Weise wird die Luft aus dem infiltrierten Fasermaterial entfernt.

Auch ohne direkten Anschluss an eine Vakuumeinheit kann der Kern als Teil des Absaugsystems fungieren, was anhand der Figur 3 erläutert werden soll, die eine bevorzugte Ausführungsform der vorliegenden Erfindung illustriert:
Dabei wird ein Kern 30 mit Aushöhlungen mittels eines luftdurchlässigen, harzdichten Trennmediums 33 zumindest teilweise von einem Bereich getrennt, in dem Fasermaterial infiltriert wird bzw. werden soll. Das Trennmedium kann insbesondere eine luftdurchlässige, harzdichte Deckschicht auf einer Oberfläche des Kerns umfassen. Der Kern wird in einer Kavität 35 eines beidseitig formgebenden Werkzeugs 36 mit Fasermaterial 37 geschichtet.

Gemäß der genannten Ausführungsform wird die Kavität 35 mit den darin befindlichen Schichten aus Fasermaterial und Kern vor dem Infiltrieren mit Matrixmaterial evakuiert. Die dafür benötigte Absaugung kann an beliebiger Stelle in der Kavität lokalisiert sein; im in der Figur 3 gezeigten Beispiel erfolgt die Absaugung an der mit II gekennzeichneten (im Bild rechten) Seite, wie durch einen Pfeil kenntlich gemacht ist. Wie von verschiedenen Harzinfusionsprozessen (z. B. SCRIMP, RTM, etc.) bekannt, kann die herkömmliche Absaugung beispielsweise punktuell, länglich, oder ringförmig ausgeführt werden.

Infolge des Evakuierens der Kavität 35 werden durch das luftdurchlässige Trennmedium 33 hindurch auch das Luftvolumen bzw. die Luftvolumina in mindestens einer Aushöhlung des Kerns abgesaugt.

Wird anschließend der Infusionsvorgang gestartet, kann das Absaugen von Luft aus der Kavität so lange fortgesetzt werden, bis das vordringende Matrixmaterial mit seiner Fließfront 39a, 39b eine entsprechende Absaugevorrichtung erreicht hat. Um Lufteinschlüsse bestmöglich zu vermeiden, empfiehlt es sich daher, die Absaugevorrichtung an einer Stelle in der Bauteilkavität zu positionieren, zu der das Matrixmaterial während der Infusion als letztes vordringt; im in Figur 3 dargestellten Ausführungsform erfolgt die Zuleitung von Matrixmaterial von der mit I gekennzeichneten Seite her, so dass die Absaugung an der Seite II der Zuleitungsseite I in Fließrichtung gegenüberliegt.

Wie in Figur 3 dargestellt, entstehen während der Infiltration des Fasermaterials 37 mit Matrixmaterial zwei Bereiche; im in der Figur 3 mit A gekennzeichneten Bereich ist das Fasermaterial bereits infiltriert. In diesem Bereich kann keine Luftabsaugung mehr durch die Absaugevorrichtung an der Seite II erfolgen. Gleichwohl können die im Verbund von Faser- und Matrixmaterial vorhandenen Gase aus dem Verbund herausgesogen werden, nämlich durch die semipermeable Oberfläche des Kerns hindurch in darin vorhandene Aushöhlungen hinein. Dies ist in der Figur 3 durch entsprechende ins Innere des Kerns weisende Pfeile markiert.

Der Bereich B ist dadurch gekennzeichnet, dass das Matrixmaterial noch nicht in ihn vorgedrungen ist. In diesem Bereich existiert ein Luftdurchlass zwischen Kern und der Absaugevorrichtung an der Seite II, so dass der Kern 30 mit Hilfe der Absaugevorrichtung durch die luftdurchlässige Trennschicht 33 hindurch weiterhin evakuiert werden kann, also Luft aus dem Kern in seine Umgebung im Bereich gesogen wird, wie durch entsprechende Pfeile im Bereich B angegeben ist.

Sind die einzelnen Zellen des Kernmaterials miteinander verbunden (z. B. bei offenporigem Schaum oder Wabenstrukturen, bei denen die einzelnen Waben untereinander verbunden sind), kann der gesamte Kern so lange auf diese Weise evakuiert werden, bis dessen semipermeable (also luftdurchlässige, harzundurchlässige) Oberfläche vollständig mit Matrixmaterial benetzt ist. Danach wird die Möglichkeit, das Kernmaterial weiterhin mittels der Absaugevorrichtung zu evakuieren, stark eingeschränkt. Die Absaugwirkung des Kernmaterials wird dadurch jedoch nicht beendet. Da im Kern zum Zeitpunkt der vollständigen oberflächigen Benetzung annäherndes Vakuum herrscht, bleibt die Druckdifferenz zwischen der Schichtung aus infiltriertem Fasermaterial und Kern weiterhin bestehen. Das führt dazu, dass trotz nicht vorhandener Verbindung von Kern und einer Vakuumeinheit (Vakuumpumpe) weiterhin Gase in den Kern gesaugt werden können. Dieser Effekt tritt so lange auf, wie eine ausreichende Druckdifferenz zwischen infiltriertem Fasermaterial und Innerem des Kerns besteht. Die Absaugwirkung in den Kern hinein kann somit weit über die Zeitspanne des Infiltrationsvorganges anhalten, sogar bis in eine Aushärtephase hinein, während der es im infiltrierten Fasermaterial zur Bildung von Reaktionsgasen kommen kann.

Sind die Zellen des Kernmaterials untereinander nicht miteinander verbunden, wie es z. B. bei einer herkömmlichen Wabenstruktur der Fall ist, tritt der Zeitpunkt früher ein, ab dem nicht mehr aktiv über die Verbindung zu einer Vakuumeinheit, sondern lediglich passiv durch das evakuierte Volumen der einzelnen Zellen des Kerns abgesaugt wird.

## Patentansprüche

1. Verfahren zur Herstellung eines mehrschichtigen Bauteils mittels Infusionstechnik, das die folgenden Schritte umfasst:
ein Schichten von Fasermaterial (17, 27, 37) und mindestens einem Kern (10, 20, 30);
ein Absaugen eines Luftvolumens aus wenigstens einer Aushöhlung (11a, 11b, 11c, 12) im mit dem Fasermaterial geschichteten Kern; und
ein Infiltrieren des Fasermaterials mit Matrixmaterial,
wobei die Aushöhlung vom infiltrierten Fasermaterial durch ein luftdurchlässiges und
harzdichtes Trennmedium (13, 23) getrennt ist, und **dadurch gekennzeichnet, dass** der Kern ein Material enthält, das bei Kontakt mit dem Matrixmaterial dessen Viskosität erhöht; und/oder
wobei zwischen einer Oberfläche des Kerns und dem Trennmedium ein Granulat oder Pulver aufgebracht ist, das bei Kontakt mit dem Matrixmaterial dessen Viskosität erhöht.

2. Verfahren gemäß Anspruch 1, wobei das Trennmedium eine luftdurchlässige, harzdichte Deckschicht (13, 23) auf einer Oberfläche des Kerns umfasst, welche die wenigstens eine Aushöhlung abdeckt.

3. Verfahren gemäß Anspruch 1 oder 2, wobei das Absaugen wenigstens teilweise durch ein direkt an den Kern angeschlossenes Verbindungselement (24) zu einer Vakuumeinheit erfolgt.

4. Verfahren gemäß einem der vorhergehenden Ansprüche, wobei das Absaugen ein Evakuieren einer Kavität (25, 35) umfasst, in der das Fasermaterial (17, 27, 37) und der Kern (10, 20, 30) auf einem einseitig formgebenden Werkzeug oder im Innern eines geschlossenen, formbildenden Werkzeugs (26, 36) für das Bauteil geschichtet sind.

5. Verfahren gemäß einem der vorhergehenden Ansprüche, wobei das Infiltrieren durch ein Zuleiten von Matrixmaterial von einer ersten Seite (I) des Kerns her erfolgt, und wobei das Absaugen durch eine Vakuumeinheit erfolgt, die Saugwirkung in Richtung einer zweiten Seite (II) des Kerns entfaltet.

6. Verfahren gemäß einem der vorhergehenden Ansprüche, wobei das Absaugen während des Infiltrierens des Fasermaterials fortgesetzt wird.

7. Verfahren gemäß einem der vorhergehenden Ansprüche, wobei der Kern eine Mehrzahl an Aushöhlungen (11c) aufweist, die mit der wenigstens einen Aushöhlung (11b) durch einen oder mehrere Luftdurchlässe (12) im Innern des Kerns verbunden sind.

8. Verfahren gemäß einem der vorhergehenden Ansprüche, wobei die wenigstens eine Aushöhlung eine erste Aushöhlung (11b, 11c, 12) ist und wobei der Kern mindestens eine weitere Aushöhlung (11a) aufweist, die vom infiltrierten Fasermaterial durch das luftdurchlässige und harzdichte Trennmedium oder durch ein weiteres luftdurchlässiges und harzdichtes Trennmedium getrennt ist und die gegenüber der ersten Aushöhlung harzdicht abgeschlossen ist.

9. Verfahren gemäß einem der vorhergehenden Ansprüche, das zudem ein Aufbringen von atmungsaktivem Material auf die Oberfläche des Kerns zur Herstellung des luftdurchlässigen, harzdichten Trennmediums (13, 23, 33) umfasst.

10. Verfahren gemäß Anspruch 9, wobei das atmungsaktive Material die mindestens eine Aushöhlung nur teilweise abdeckt, und wobei das Verfahren zudem ein Aufbringen eines luftdichten Versiegelungsmaterials (14) umfasst, das zusammen mit dem atmungsaktiven Material die Aushöhlung vollständig abdeckt.

11. Verfahren gemäß einem der vorhergehenden Ansprüche, wobei das luftdurchlässige, harzdichte Trennmedium (13, 23, 33) eine semipermeable Membran umfasst, und wobei das Verfahren ein Fixieren der semipermeablen Membran auf einer Oberfläche des Kerns umfasst.

12. Kombination aus einem Kern für ein mehrschichtiges Faserverbundbauteil und einem Matrixmaterial, wobei der Kern wenigstens eine Aushöhlung (11a, 11b, 11c, 12) aufweist, die durch ein luftdurchlässiges, harzdichtes Trennmedium (13, 23, 33) abgedeckt ist, **dadurch gekennzeichnet, dass** der Kern ein Material enthält, das bei Kontakt mit dem Matrixmaterial dessen Viskosität erhöht; und/oder wobei zwischen einer Oberfläche des Kerns und dem Trennmedium ein Granulat oder Pulver angeordnet ist, das bei Kontakt mit dem Matrixmaterial dessen Viskosität erhöht.

13. Kombination gemäß Anspruch 12, der eine Mehrzahl an Aushöhlungen (11c, 12) aufweist, die mit der wenigstens einen Aushöhlung (11b) durch einen oder mehrere Luftdurchlässe (12) im Innern des Kerns verbunden sind.

14. Kombination gemäß Anspruch 12 oder 13, wobei die wenigstens eine Aushöhlung (11b) eine erste Aushöhlung ist und wobei der Kern mindestens eine weitere Aushöhlung (11a) aufweist, die von einem luftdurchlässigen, harzdichten Trennmedium (13, 23, 33) abgedeckt ist und die gegenüber der ersten Aushöhlung (11b) harzdicht abgeschlossen ist.

15. Infusionsanlage zur Herstellung von Faserverbundbauteilen, enthaltend eine Kombination gemäß einem der Ansprüche 12 bis 14, mit einer Vakuumeinheit die dazu eingerichtet ist, ein Luftvolumen aus der mindestens einen Aushöhlung des verwendeten Kerns abzusaugen und ein Verfahren gemäß einem der Ansprüche 1 bis 11 auszuführen.

## Claims

1. Method for producing a multi-layer component by means of infusion technology, said method comprising the following steps:
layering fibre material (17, 27, 37) and at least one core (10, 20, 30);
suction-extraction of a volume of air from at least one hollow (11a, 11b, 11c, 12) in the core layered with the fibre material; and
infiltrating the fibre material with matrix material,
wherein the hollow is separated from the infiltrated fibre material by an air-permeable and resin-tight separation medium (13, 23), and
**characterized in that**
the core comprises a material whose viscosity increases upon contact with the matrix material; and/or
wherein a granular material or powder whose viscosity increases upon contact with the matrix material is applied between a surface of the core and the separation medium.

2. Method according to Claim 1, wherein the separation medium comprises an air-permeable, resin-tight top layer (13, 23) on a surface of the core, said top layer covering the at least one hollow.

3. Method according to Claim 1 or 2, wherein the suction-extraction is at least partially effected by means of a connecting element (24), which is directly connected to the core, leading to a vacuum unit.

4. Method according to one of the preceding claims, wherein the suction-extraction comprises evacuating a cavity (25, 35), in which the fibre material (17, 27, 37) and the core (10, 20, 30) are coated on a tool that shapes on one side or in the interior of a closed, shaping tool (26, 36) for the component.

5. Method according to one of the preceding claims, wherein the infiltration is effected by supplying matrix material from a first side (I) of the core, and wherein the suction-extraction is effected by means of a vacuum unit, the suction action developing in the direction of a second side (II) of the core.

6. Method according to one of the preceding claims, wherein the suction-extraction is continued during the infiltration of the fibre material.

7. Method according to one of the preceding claims, wherein the core has a plurality of hollows (11c) which are connected to the at least one hollow (11b) by way of one or more air passages (12) in the interior of the core.

8. Method according to one of the preceding claims, wherein the at least one hollow is a first hollow (11b, 11c, 12) and wherein the core has at least one further hollow (11a), which is separated from the infiltrated fibre material by the air-permeable and resin-tight separation medium or by a further air-permeable and resin-tight separation medium and which is closed off in a resin-tight manner in relation to the first hollow.

9. Method according to one of the preceding claims, which additionally comprises applying breathable material to the surface of the core in order to produce the air-permeable, resin-tight separation medium (13, 23, 33) .

10. Method according to Claim 9, wherein the breathable material only partially covers the at least one hollow, and wherein the method additionally comprises applying an air-tight sealing material (14) which, together with the breathable material, completely covers the hollow.

11. Method according to one of the preceding claims, wherein the air-permeable, resin-tight separation medium (13, 23, 33) comprises a semipermeable membrane, and wherein the method comprises fixing the semipermeable membrane to a surface of the core.

12. Combination of a core for a multilayer fibre composite component and a matrix material, wherein the core has at least one hollow (11a, 11b, 11c, 12) which is covered by an air-permeable, resin-tight separation medium (13, 23, 33),
**characterized in that**
the core comprises a material whose viscosity increases upon contact with the matrix material; and/or wherein a granular material or powder whose viscosity increases upon contact with the matrix material is arranged between a surface of the core and the separation medium.

13. Combination according to Claim 12, which has a plurality of hollows (11c, 12) which are connected to the at least one hollow (11b) by way of one or more air passages (12) in the interior of the core.

14. Combination according to Claim 12 or 13, wherein the at least one hollow (11b) is a first hollow and wherein the core has at least one further hollow (11a), which is covered by an air-permeable, resin-tight separation medium (13, 23, 33) and which is closed off in a resin-tight manner in relation to the first hollow (11b).

15. Infusion installation for producing fibre composite components, containing a combination according to one of Claims 12 to 14, comprising a vacuum unit which is configured for the suction-extraction of a volume of air from the at least one hollow of the core used and for carrying out a method according to one of Claims 1 to 11.

## Revendications

1. Procédé de fabrication d'un composant multicouche au moyen d'une technique d'infusion, qui comporte les étapes suivantes :
une stratification de matériau fibreux (17, 27, 37) et d'au moins un noyau (10, 20, 30) ;
une aspiration d'un volume d'air à partir d'au moins un évidement (11a, 11b, 11c, 12) dans le noyau stratifié avec le matériau fibreux ; et
une infiltration du matériau fibreux avec un matériau de matrice,
dans lequel l'évidement est séparé du matériau fibreux infiltré par un milieu de séparation perméable à l'air et étanche aux résines (13, 23), et
**caractérisé en ce que**
le noyau contient un matériau dont la viscosité augmente au contact du matériau de matrice ; et/ou
dans lequel un granulat ou une poudre, dont la viscosité augmente au contact du matériau de matrice, est appliqué entre une surface du noyau et le milieu de séparation.

2. Procédé selon la revendication 1, dans lequel le milieu de séparation comporte une couche de recouvrement perméable à l'air, étanche aux résines (13, 23), sur une surface du noyau, qui recouvre l'au moins un évidement.

3. Procédé selon la revendication 1 ou 2, dans lequel l'aspiration a lieu au moins partiellement par un élément de liaison (24) raccordé directement au noyau vers une unité de vide.

4. Procédé selon l'une quelconque des revendications précédentes, dans lequel l'aspiration comporte une évacuation d'une cavité (25, 35), dans laquelle le matériau fibreux (17, 27, 37) et le noyau (10, 20, 30) sont stratifiés sur un outil façonnant d'un côté ou à l'intérieur d'un outil formant fermé (26, 36) pour le composant.

5. Procédé selon l'une quelconque des revendications précédentes, dans lequel l'infiltration a lieu par un apport de matériau de matrice à partir d'un premier côté (I) du noyau, et dans lequel l'aspiration a lieu par une unité de vide, qui déploie une action d'aspiration en direction d'un deuxième côté (II) du noyau.

6. Procédé selon l'une quelconque des revendications précédentes, dans lequel l'aspiration est poursuivie pendant l'infiltration du matériau fibreux.

7. Procédé selon l'une quelconque des revendications précédentes, dans lequel le noyau comprend une pluralité d'évidements (11c), qui sont reliés avec l'au moins un évidement (11b) par un ou plusieurs passages d'air (12) à l'intérieur du noyau.

8. Procédé selon l'une quelconque des revendications précédentes, dans lequel l'au moins un évidement est un premier évidement (11b, 11c, 12) et dans lequel le noyau comprend au moins un évidement supplémentaire (11a), qui est séparé du matériau fibreux infiltré par le milieu de séparation perméable à l'air et étanche aux résines ou par un milieu de séparation perméable à l'air et étanche aux résines supplémentaire et qui est fermé de manière étanche aux résines vis-à-vis du premier évidement.

9. Procédé selon l'une quelconque des revendications précédentes, qui comporte en outre une application de matériau respirant sur la surface du noyau pour la fabrication du milieu de séparation perméable à l'air, étanche aux résines (13, 23, 33).

10. Procédé selon la revendication 9, dans lequel le matériau respirant ne recouvre que partiellement l'au moins un évidement, et dans lequel le procédé comporte en outre une application d'un matériau de scellement étanche à l'air (14) qui, conjointement avec le matériau respirant, recouvre entièrement l'évidement.

11. Procédé selon l'une quelconque des revendications précédentes, dans lequel le milieu de séparation perméable à l'air, étanche aux résines (13, 23, 33) comporte une membrane semi-perméable, et dans lequel le procédé comporte une fixation de la membrane semi-perméable sur une surface du noyau.

12. Combinaison d'un noyau pour un composant composite fibreux multicouche et d'un matériau de matrice, dans laquelle le noyau comprenant au moins un évidement (11a, 11b, 11c, 12), qui est recouvert par un milieu de séparation perméable à l'air, étanche aux résines (13, 23, 33), **caractérisée en ce que** le noyau contient un matériau dont la viscosité augmente au contact du matériau de matrice ; et/ou dans laquelle un granulat ou une poudre, dont la viscosité augmente au contact du matériau de matrice, est agencé entre une surface du noyau et le milieu de séparation.

13. Combinaison selon la revendication 12, qui comprend une pluralité d'évidements (11c, 12), qui sont reliées avec l'au moins un évidement (11b) par un ou plusieurs passages d'air (12) à l'intérieur du noyau.

14. Combinaison selon la revendication 12 ou 13, dans laquelle l'au moins un évidement (11b) est un premier évidement et dans laquelle le noyau comprend au moins un évidement supplémentaire (11a), qui est recouvert par un milieu de séparation perméable à l'air, étanche aux résines (13, 23, 33), et qui est fermé de manière étanche aux résines vis-à-vis du premier évidement (11b).

15. Unité d'infusion pour la fabrication de composants composites fibreux, contenant une combinaison selon l'une quelconque des revendications 12 à 14, munie d'une unité de vide qui est conçue pour aspirer un volume d'air à partir de l'au moins un évidement du noyau utilisé et pour réaliser un procédé selon l'une quelconque des revendications 1 à 11.
